# EUROPÄISCHE PATENTANMELDUNG

(11) **EP 4 531 271 A1**
(43) Veröffentlichungstag der Anmeldung: **02.04.2025**
(21) Anmeldenummer: 23200899.5
(22) Anmeldetag: 29.09.2023
(51) Int. Cl.: H02P 29/50, H02P 27/08

(54) **VERFAHREN ZUR STEUERUNG VON ANTRIEBSSYSTEMEN UND ANTRIEBSSYSTEME**

(71) Anmelder: Siemens Aktiengesellschaft, 80333 München (DE)
(72) Erfinder: Köllensperger, Peter, 90562 Heroldsberg (DE); Tsotoulidis, Savvas, 90491 Nürnberg (DE)
(74) Vertreter: Siemens Patent Attorneys

(57) **Zusammenfassung**

Die Erfindung betrifft ein Verfahren zur Steuerung einer elektrischen durch eine elektronische Steuereinrichtung (201) gespeisten Maschine (202), wobei zumindest eine Einstellung der Steuereinrichtung (201) automatisch derart geändert wird (103), dass zumindest ein mittels einer akustischen Messvorrichtung (203) messbarer, Maschinengeräusche (207) charakterisierender Parameter vermindert wird.

## Beschreibung

Die vorliegende Offenbarung betrifft ein Verfahren zur Steuerung einer elektrischen durch eine elektronische Steuereinrichtung gespeisten, vorzugsweise rotatorischen Maschine.

Umrichtergespeiste Motoren erzeugen im Vergleich zu direkt am Netz laufenden Motoren Zusatzgeräusche, die von verschiedenen Parametern abhängen. Auch wenn sie nicht komplett vermieden werden können, so können sie jedoch minimiert werden. Allerdings ist eine optimale Einstellung durch den Anwender nur schwierig möglich, da diese von vielen (auch anlagenbezogenen) Faktoren abhängen.

Die vorliegende Offenbarung betrifft Verfahren und Systeme, die eine Reduktion von durch ein Antriebssystem erzeugtem Lärm ermöglichen.

Grundsätzlich sind Verfahren zur Reduktion von Motorgeräuschen bekannt. Ein möglicher Ansatz besteht darin, die Pulsfrequenz des Umrichters zu erhöhen, da dadurch die Stromwelligkeit abnimmt und normalerweise auch die mechanische Dämpfung zunimmt. Der wesentliche Nachteil dieser Methode ist das erforderliche Leistung-Derating des Umrichters, so dass dieser evtl. sogar größer gewählt werden muss und infolgedessen mehr Platz einnimmt.

Die Aufgabe der vorliegenden Erfindung besteht somit darin, Verfahren und Systeme bereitzustellen, die einfach sind und keine Änderung des Antriebssystems erfordern.

Die Aufgabe wird mit einem eingangs genannten Verfahren dadurch gelöst, dass zumindest eine Einstellung der Steuereinrichtung automatisch derart geändert wird, dass zumindest ein mittels einer akustischen Messvorrichtung messbarer, Maschinengeräusche charakterisierender Parameter optimiert wird.

In der Regel wird die Messung des die Maschinengeräusche charakterisierenden Parameters an der Maschine durchgeführt.

Der Begriff "an der Maschine" bedeutet, dass die Messung mit einer von der Maschine getrennt ausgebildeten, vorzugsweise portablen, insbesondere nicht an der Maschine angebrachten Sensorvorrichtung durchgeführt wird.

Es kann vorgesehen sein, dass der Parameter einmal vor und einmal nach der Änderung der zumindest einen Einstellung gemessen wird und die Einstellung in Abhängigkeit von einer Optimierung des zumindest einen Parameters übernommen wird.

Es kann vorgesehen sein, dass der Parameter die Lautheit, die Schärfe, Tonhaltigkeit, oder Rauigkeit, usw. ist.

Es kann vorgesehen sein, dass die zumindest eine Einstellung magnetischen Fluss, Schaltfrequenz, Zwischenkreisspannung, Modulation, insbesondere Frequenz-Modulation, Pulsmuster oder eine Kombination davon betrifft. Bei der Frequenz-Modulation kann als Spezialfall beispielsweise das Wobbeln in Frage, d.h. eine selbsttätige permanente Änderung der Schaltfrequenz.

Bei einer Ausführungsform kann es vorgesehen sein, dass das Optimieren des zumindest einen Parameters eine Optimierungsschleife umfasst, welche bis zu einem vorgebbaren Abbruchkriterium durchlaufen wird. Insbesondere wird die Optimierungsschleife mehrmals durchlaufen, bis das Abbruchkriterium erfüllt ist.

Dabei kann es zweckdienlich sein, wenn das Abbruchkriterium auf einer Feststellung einer Verbesserung der Geräusche basiert und/oder ein Optimierungsziel für den zumindest einen Parameter umfasst.

Außerdem wird die Aufgabe mit einer beispielsweise mobilen beziehungsweise tragbaren Recheneinheit zur Steuerung einer elektrischen durch eine elektronische Steuereinrichtung gespeisten vorzugsweise rotatorischen Maschine, wobei die Recheneinheit mit einer akustischen Messvorrichtung, wobei die Messvorrichtung zum Ermitteln zumindest eines Maschinengeräusche charakterisierenden Parameters vorgesehen ist, verbindbar ist, um den zumindest einen Parameter zu erhalten, die Recheneinheit mit der elektronischen Steuereinrichtung verbindbar ist und dazu eingerichtet ist, zumindest eine Einstellung der Steuereinrichtung derart zu verändern, dass der Parameter optimiert wird.

Beim Ermitteln des Parameters wird das Geräusch durch die Messvorrichtung aufgenommen, wobei die Messvorrichtung als ein entsprechendes Messignal erzeugt, aus welchem der Parameter bestimmt wird. Die Auswertung des Messignals kann entweder durch die Messvorrichtung oder durch die Recheneinheit oder gar extern erfolgen, d.h. durch ein Rechensystem, wie z.B. Cloud.

Es kann vorgesehen sein, dass die Recheneinheit von der akustischen Messvorrichtung baulich getrennt ausgebildet ist und mit der akustischen Messvorrichtung kabelgebunden, beispielsweise über USB, oder drahtlos, beispielsweise über Bluetooth verbindbar ist.

Beispielsweise kann die Recheneinheit die akustische Messvorrichtung umfassen.

Es kann vorgesehen sein, dass die akustische Messvorrichtung einen oder mehr akustische Sensoren, beispielsweise Mikrophone, aufweist.

Vorzugsweise ist die Recheneinheit mit der elektronischen Steuereinrichtung über einen in der elektronischen Steuereinrichtung vorgesehenen Webserver (bzw. über lokale Benutzeroberfläche der elektronischen Steuereinrichtung) verbindbar.

Alternativ kann die elektronische Steuereinrichtung über einen Datenbus gesteuert werden.

Beispielsweise kann die Recheneinheit über einen dedizierten Adapter mit der elektronischen Steuereinrichtung verbunden werden. Der Adapter, z.B. Bluetooth-fähiger Adapter, kann baulich getrennt von der Recheneinheit und/oder der elektronischen Steuereinheit ausgebildet sein. Alternativ kann der Adapter von der Recheneinheit bzw. der Steuereinrichtung umfasst sein. Insbesondere kann die Recheneinheit als Smartphone ausgebildet und mit der Steuereinrichtung über einen Profinet-Adapter verbindbar sein.

Es kann vorgesehen sein, dass zwischen der Recheneinheit und der elektronischen Steuereinrichtung ein oder mehrere weitere Geräte und/oder Vorrichtungen zwischengeschaltet sind. Beispielsweise kann die Recheneinheit (beispielsweise über den oben beschriebenen Adapter) mit einem Edge-Gerät, welches als ein industrieller Computer ausgebildet sein kann, oder mit einer speicherprogrammierbaren Steuerung (SPS; englisch: programmable logic controller, PLC) verbunden werden, das beziehungsweise die mit der elektronischen Steuereinrichtung verbunden ist und die Einstellungsparameter der elektronischen Steuereinrichtung ändern kann, wenn beispielsweise entsprechende Befehle von der Recheneinheit an das Edge-Gerät oder an die SPS übertragen werden.

Außerdem wird die Aufgabe mit einem Antriebssystem gelöst, welches die oben beschriebene Recheneinheit, eine elektronische Steuereinrichtung, eine elektrische Maschine, und eine akustische Messvorrichtung aufweisen, wobei die elektrische Maschine mittels der elektronischen Steuereinrichtung mit einem Energieversorgungsnetz verbindbar ist, wobei die Recheneinheit mit der elektronischen Steuereinrichtung und mit der akustischen Messvorrichtung verbunden ist.

Es kann vorgesehen sein, dass die elektronische Steuereinrichtung als ein Umrichter ausgebildet ist.

Es kann vorgesehen sein, dass die elektrische Maschine ein Motor, insbesondere ein Synchron- oder Asynchronmotor ist.

Im Folgenden wird die Erfindung anhand der in den Figuren dargestellten Ausführungsbeispiele näher beschrieben und erläutert. Es zeigen:
- FIG 1: ein Flussdiagramm eines Steuerungsverfahrens, und
- FIG 2: ein Antriebssystem.

In den Ausführungsbeispielen und Figuren können gleiche oder gleich wirkende Elemente jeweils mit den gleichen Bezugszeichen versehen sein. Die dargestellten Elemente und deren Grö-ßenverhältnisse untereinander sind grundsätzlich nicht als maßstabsgerecht anzusehen, vielmehr können einzelne Elemente, zur besseren Darstellbarkeit und/oder zum besseren Verständnis im Verhältnis größer dimensioniert dargestellt sein.

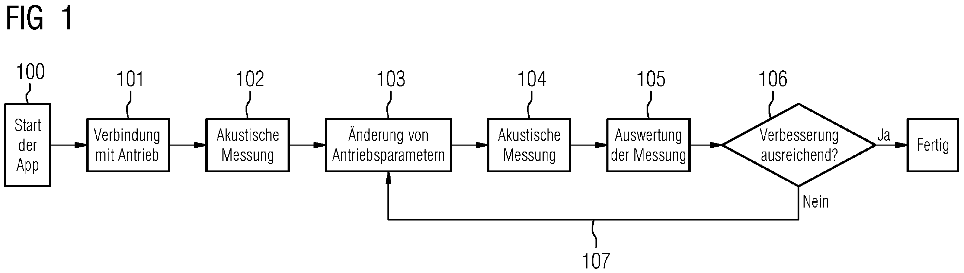

FIG 1 zeigt ein Flussdiagramm eines Verfahrens zur Steuerung einer elektrischen durch eine elektronische Steuereinrichtung gespeisten beispielsweise rotatorischen Maschine.

Die elektronische Steuereinrichtung kann als Umrichter ausgebildet sein. Dabei können Umrichter eingesetzt werden, die einen Zwischenkreis aufweisen und eine Eingangsspannung zunächst in eine Gleichspannung im Zwischenkreis umwandeln, bevor diese wieder in eine Wechselspannung zur Speisung der elektrischen Maschine umgewandelt wird.

Das offenbarte Verfahren ist für alle Kombinationen von Umrichtern und Maschinen durchführbar.

Die elektrische Maschine ist vorzugsweise eine elektrische rotatorische Maschine, insbesondere ein Motor, z.B. eine Asynchron- oder Synchronmaschine.

Das Verfahren kann in einem maschinenlesbaren Code implementiert werden, welcher durch eine Recheneinheit ausgeführt werden kann.

Im Zusammenhang mit der vorliegenden Offenbarung bezieht sich der Begriff "Recheneinheit" auf ein elektronisches Rechengerät beispielsweise auf einen Computer, eine virtuelle Maschine, einen virtuellen Container, einen Host, einen Server, ein Client-Gerät, einen Laptop, ein Tablet, und/oder ein mobiles Gerät (z.B. ein Smartphone), oder auf eine Vielzahl von elektronischen Rechengeräten, die zusammenarbeiten, um das beschriebene Verfahren bzw. die beschriebenen Funktionen auszuführen.

Die Recheneinheit kann verschiedene Hardwarekomponenten beispielsweise einen oder mehrere Prozessoren, Datenbusse, flüchtige und/oder nicht-flüchtige Speicher, Eingabegeräte, Stromquellen, Netzwerkschnittstellen, Benutzerschnittstellen und/oder andere Computerkomponenten umfassen, ist jedoch auf diese nicht beschränkt. Die Prozessoren können einen oder mehrere Mikroprozessoren umfassen, die in der Lage sind, Anweisungen aus dem Speicher auszuführen. Zusätzlich oder alternativ können die Prozessoren anwendungs-spezifische integrierte Schaltungen (ASICs), programmierbare Gatterfelder (FPGAs) und/oder andere Geräte umfassen, die entwickelt wurden, um einige oder alle der hier offenbarten Verfahren bzw. Funktionen auszuführen, ohne notwendigerweise Anweisungen aus dem Speicher abrufen zu müssen.

Der maschinenlesbare Code kann beispielsweise in Form einer Anwendung oder, aus dem Englischen abgeleitet einer App vorliegen. Im Zusammenhang mit der vorliegenden Offenbarung bezieht sich der Begriff "Anwendung (oder App)" auf ein oder mehrere Berechnungsmodule, Programme und/oder eine Reihe von Berechnungsanweisungen, die von einem eine oder mehr Recheneinheiten enthaltenden Computersystem ausgeführt werden. Beispiele kann eine App ein oder mehr Softwaremodule, Softwareobjekte, eine oder mehr Softwareinstanzen und/oder andere Arten ausführbaren Codes umfassen oder als solche ausgebildet sein.

Es kann darüber hinaus vorgesehen sein, dass die Recheneinheit mit weiteren Ressourcen beispielsweise über ein weiteres lokales oder globales Netzwerk verbunden ist, um auf weitere Informationen betreffend die elektronische Steuereinrichtung und/oder elektrische Maschine und/oder deren Betrieb zuzugreifen und dadurch die Optimierung zu verbessern. So kann es beispielsweise vorgesehen sein, dass die App auf Informationen auf einem (internen oder externen) Server zurückgreift, um zielgerichteter zu optimieren. Solche Informationen können charakteristische Eigenschaften der Maschine, beispielsweise mechanische Resonanzfrequenzen des Motors o.Ä. umfassen.

Nach Starten 100 der App auf der Recheneinheit, kann eine Verbindung mit dem Antrieb, beispielsweise mit dem Umrichter aufgebaut werden 101.

Nach dem Aufbau der Verbindung kann über die App eine akustische Messung initiiert werden, bei welcher mittels einer externen oder von der Recheneinheit enthaltenen Sensorik Geräusche vermessen werden 102, die von dem Antrieb, beispielsweise von dem Umrichter oder von der elektrischen Maschine emittiert werden. Mit anderen Worten wird eine Referenzmessung durchgeführt.

Anschließend wird zumindest ein Antriebsparameter automatisch, d.h., ohne dass es einer Benutzereingabe bedarf, geändert 103, mit dem Ziel Maschinengeräusche zu reduzieren.

Um zu bestimmen, welchen oder welche Antriebsparameter geändert werden, kann beispielsweise die Auswertung der akustischen Referenzmessung und/oder Expertenwissen verwendet werden. Alternativ kann der zu ändernde Parameter zufällig gewählt werden.

Nachdem der zumindest eine Antriebsparameter geändert worden ist, kann eine weitere akustischen Messung vorgenommen werden 104, um den Einfluss der Parameteränderung auf die Maschinengeräusche zu untersuchen.

Die Ergebnisse der weiteren akustischen Messung werden ausgewertet 105. Der Einfluss wird durch einen oder mehrere die Maschinengeräusche charakterisierenden Parameter quantifiziert. Der/die Parameter kann/können die Lautheit, die Schärfe, Tonhaltigkeit, oder Rauigkeit, usw. sein. Der Einfluss kann auch hinsichtlich einer Kombination, insbesondere einer gewichteten Kombination der (einzelnen) Parameter quantifiziert werden.

Mit anderen Worten wird durch den/die Parameter oder durch ihre Kombination ein Optimierungskriterium festgelegt, hinsichtlich dessen die Geräusche optimiert werden sollen.

Wird eine Verbesserung bezüglich des Optimierungskriteriums festgestellt 106, kann die Optimierung weiterlaufen, indem die gleichen und/oder die weiteren Parameter der elektronischen Steuereinrichtung geändert werden, anschließend eine weitere Messung erfolgt, deren Ergebnisse mit den Ergebnissen der letzten verglichen werden und so weiter und so fort. Mit anderen Worten enthält die Optimierung eine Optimierungsschleife 107.

Es kann vorgesehen sein, dass die Optimierungsschleife 107 bis zu einem vordefinierten Abbruchkriterium läuft. Beispielsweise kann das Abbruchkriterium vorschreiben, dass wenn nach mehreren Durchläufen, bei welchen verschiedene Parameter des Antriebs geändert werden, keine Verbesserung eintritt, die Optimierung beendet wird.

Mehrere Durchläufe sind deshalb bevorzugt, zumal bei der Optimierung mehrere Parameter der elektronischen Steuereinrichtung, insbesondere des Umrichters beeinflusst werden können. Mit mehreren Durchläufen, können somit mehrere Parameteränderungen und infolgedessen mehrere Optimierungsrichtungen ausprobiert werden.

In einer bevorzugten Ausführungsform kann als Abbruchkriterium das Erreichen vorbestimmter Werte, der die Maschinengeräusche charakterisierenden Parameter fungieren. Anders ausgedrückt kann die Optimierung beendet werden, wenn ein vorgegebenes Optimierungsziel erreicht wird.

Die Auswahl des Abbruchkriteriums und insbesondere des Optimierungsziels kann automatisch erfolgen und benötigt keine Interaktion mit dem Benutzer.

Dennoch können bei der Optimierung grundsätzlich zwei oder mehr Optima gefunden werden, die sich bezüglich einzelner Parameter unterscheiden, z.B. lautes, aber angenehmes Geräusch gegenüber einem weniger lauten, aber dafür unangenehmen, z.B. schrillen Geräusch. In einem solchen Fall könnten dem Anwender die Varianten vorgeführt und zur Auswahl auf einem Anzeigemittel angezeigt werden.

Vorzugsweise wird die geänderte Einstellung des Antriebs dann übernommen, wenn eine Verbesserung des Geräuschs festgestellt wird.

Vorteilhaft ist, dass der Benutzer der App nicht selbst die optimalen Antriebsparameter suchen und übernehmen muss, da dies vollautomatisch erfolgen kann.

Durch Änderung der Antriebsparametern kann beispielsweise magnetischer Fluss, Schaltfrequenz, Zwischenkreisspannung, Modulationsverfahren, z.B. RZM/Flattop, optimierte Pulsmuster, etc., oder eine Kombination davon beeinflusst werden, um die Maschinengeräusche zu reduzieren.

Die Änderung der Zwischenkreisspannung kann zu anderen Aussteuergraden auf der Motorseite und damit anderen Stromoberschwingungen führen, wodurch die Motorgeräusche reduziert werden können.

Neben einer Flussabsenkung kann auch eine Erhöhung des magnetischen Flusses und der damit verbundenen Erhöhung des Aussteuergrades je nach Arbeitspunkt der elektrischen Maschine und/oder Umrichters zu einer Geräuschreduktion führen. Die Erhöhung des Flusses ist insbesondere dann möglich, wenn die elektrische rotatorische Maschine über entsprechende Auslegungsreserven verfügt, so dass das Eisen bei einer Erhöhung des magnetischen Flusses nicht oder nicht zu weit in Sättigung geht. Darüber hinaus kann zur Geräuschreduktion die Pulsfrequenz erhöht werden, wenn eine Flusserhöhung den Motorstrom reduziert.

Anders ausgedrückt, zeigt FIG 1 ein Workflow zur Optimierung der Maschine hinsichtlich des erzeugten Geräuschpegels.

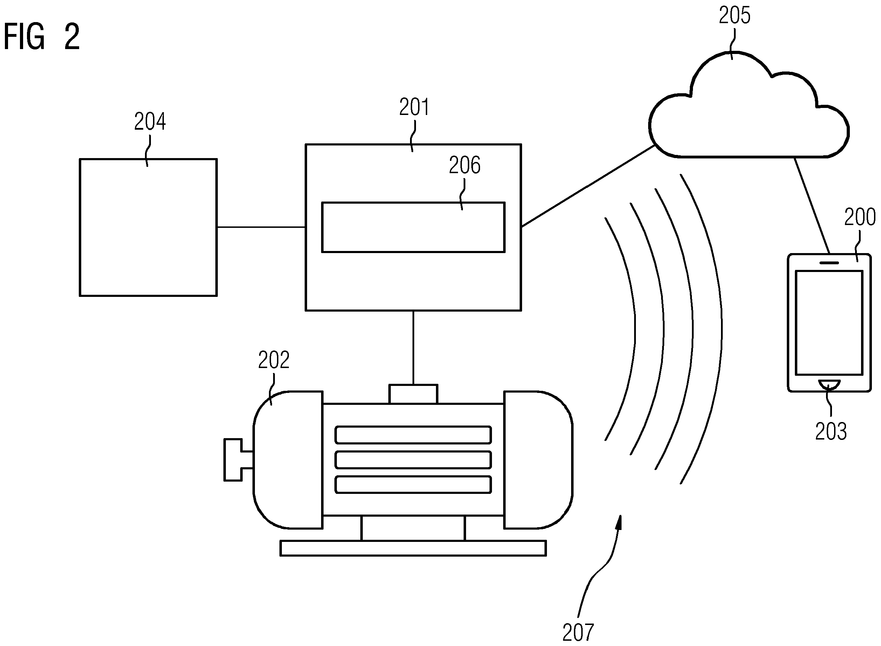

FIG 2 zeigt ein Antriebssystem, das dem erfindungsgemäßen Antriebssystem entsprechen kann.

Das Antriebssystem umfasst ein mobiles Rechengerät 200, eine elektronische Steuereinrichtung 201, beispielsweise einen Umrichter, eine elektrische rotatorische Maschine 202, beispielsweise einen Elektromotor, und eine akustische Messvorrichtung 203, beispielsweise ein Mikrophon, welche vorliegend eine bauliche Einheit mit dem mobilen Rechengerät 200 bildet.

Die elektrische rotatorische Maschine 202 ist mittels des Umrichters mit einem Energieversorgungsnetz 204 verbunden.

Das mobile Rechengerät 200 ist mit der elektronischen Steuereinrichtung 201 über ein Netzwerk 205 verbunden. Das Netzwerk 205 kann als lokales oder als globales Netzwerk ausgebildet sein.

Beispielsweise kann die Steuereinrichtung 201 einen Webserver 206 aufweisen, über welchen das mobile Rechengerät 200 mit der Steuereinrichtung 201 verbunden werden kann.

Wie herein erwähnt, kann die Recheneinheit alternativ oder zusätzlich über einen dedizierten Adapter (hier nicht gezeigt) mit der elektronischen Steuereinrichtung verbunden werden. Der Adapter, z.B. Bluetooth-fähiger Adapter, kann baulich getrennt von der Recheneinheit und/oder der elektronischen Steuereinheit ausgebildet sein. Alternativ kann der Adapter von der Recheneinheit bzw. der Steuereinrichtung umfasst sein.

Es kann darüber hinaus vorgesehen sein, dass zwischen der Recheneinheit und der elektronischen Steuereinrichtung ein oder mehrere weitere Geräte und/oder Vorrichtungen zwischengeschaltet sind (hier nicht gezeigt). Beispielsweise kann die Recheneinheit (beispielsweise über den oben beschriebenen Adapter) mit einem Edge-Gerät, welches als ein industrieller Computer ausgebildet sein kann, oder mit SPS verbunden werden, das beziehungsweise die mit der elektronischen Steuereinrichtung verbunden ist und die Einstellungsparameter der elektronischen Steuereinrichtung ändern kann, wenn beispielsweise entsprechende Befehle von der Recheneinheit an das Edge-Gerät oder an die SPS übertragen werden.

Im Betrieb emittiert das Antriebssystem und insbesondere die Steuereinrichtung 201 und/oder die elektrische rotatorische Maschine 202 Schallwellen 207, die als Geräusch wahrgenommen werden.

Nach dem Anbinden des mobilen Rechengeräts 200 an das Antriebssystem können die Schallwellen 207 mit der dafür vorgesehenen akustischen Sensorik 203 des Rechengeräts 200 gemessen werden.

Die Messergebnisse dieser Messung dienen als Start-Ergebnisse für die nachfolgende Optimierung.

Die App kann eine Recommendation-Engine umfassen, die dem Anwender eine Auswahl von verschiedenen Optimierungszielen, beispielsweise hinsichtlich der Lautheit und/oder der Schärfe vorschlagen kann.

Nach der Messung wird ein Optimierungsvorgang, z.B. die in Hinblick auf FIG 1 beschriebene Optimierung, gestartet. Dabei verändert die App die Einstellungen (der elektronischen Steuereinrichtung 201, und beurteilt (z.B., anhand der Parameterwerte, wie Lautheit, Schärfe, etc.), ob diese Veränderung die Motorgeräusche, wie erwartet, vermindert hat und/oder ob das Optimierungsziel bereits erreicht ist. Dabei kann zur Beurteilung eine Gütezahl aus den Optimierungsparametern berechnet werden.

Die Auswahl der zu ändernden Parameter des Antriebs kann aufgrund eines oder mehrerer folgender Kriterien vorgenommen werden: Trial & Error Änderungen innerhalb bestimmter Grenzen, feste Regeln für Optimierungsschritte, Rückgriff auf "Erfahrung/Kl", z.B. aus Cloud.

Parameteränderungen können unter Bezugnahme auf zusätzliche Information über die elektronische Steuereinrichtung 201 und/oder über die elektrische Maschine 202 optimiert werden. Z.B. kann bei Kenntnis von mechanischen Resonanzen eines Motors, eine gezielte Vermeidung von Anregungen in diesem Frequenzbereich versucht werden - feste Regel.

Das hat den Vorteil, dass der Benutzer sich nicht mit den relevanten Parametern des Umrichters auskennen muss.

Außerdem ist der hier beschriebene Optimierungsvorgang viel schneller, da keine manuelle Parameteränderung der Steuereinrichtung 201 notwendig ist.

Außerdem sind feingranulare Einstellungen möglich, z.B. Schaltfrequenz in 100 Hz Schritten (sofern durch Steuerungseinrichtung ermöglicht), die einem Benutzer ansonsten nicht freigeschaltet sind.

Die Aufgabe dieser Beschreibung besteht lediglich darin, veranschaulichende Beispiele bereitzustellen und weitere Vorteile und Besonderheiten dieser Erfindung anzugeben. Insbesondere können die im Zusammenhang mit den hier beschriebenen Verfahren offenbarten Merkmale sinnvollerweise zur Weiterbildung der hier beschriebenen Systeme eingesetzt werden und *vice versa.*

## Patentansprüche

1. Verfahren zur Steuerung einer elektrischen durch eine elektronische Steuereinrichtung (201) gespeisten Maschine (202), wobei
- zumindest eine Einstellung der Steuereinrichtung (201) automatisch derart geändert wird (103), dass zumindest ein mittels einer akustischen Messvorrichtung (203) messbarer, Maschinengeräusche (207) charakterisierender Parameter optimiert wird.

2. Verfahren nach Anspruch 1, wobei der Parameter einmal vor (102) und einmal nach (104) der Änderung der zumindest einen Einstellung gemessen wird und die Einstellung in Abhängigkeit von einer Optimierung des zumindest einen Parameters übernommen (106) wird.

3. Verfahren nach Anspruch 1 oder 2, wobei der Parameter die Lautheit, die Schärfe, Tonhaltigkeit oder Rauigkeit, ist.

4. Verfahren nach einem der Ansprüche 1 bis 3, wobei die zumindest eine Einstellung magnetischen Fluss, Schaltfrequenz, Zwischenkreisspannung, Modulationsverfahren, Pulsmuster oder eine Kombination davon betrifft.

5. Verfahren nach einem der Ansprüche 1 bis 4, wobei das Optimieren des zumindest einen Parameters eine Optimierungsschleife (107) umfasst, welche bis zu einem vorgebbaren Abbruchkriterium durchlaufen wird.

6. Verfahren nach Anspruch 5, wobei das Abbruchkriterium auf einer Feststellung einer Verbesserung der Geräusche basiert und/oder ein Optimierungsziel für den zumindest einen Parameter umfasst.

7. Recheneinheit zur Steuerung einer elektrischen durch eine elektronische Steuereinrichtung (201) gespeisten Maschine (202), wobei
die Recheneinheit (200) mit einer akustischen Messvorrichtung (203), wobei die akustische Messvorrichtung (203) zum Ermitteln zumindest eines Maschinengeräusche (207) charakterisierenden Parameters vorgesehen ist, verbindbar ist, um den zumindest einen Parameter zu erhalten,
die Recheneinheit (200) mit der elektronischen Steuereinrichtung (201) verbindbar ist und dazu eingerichtet ist, zumindest eine Einstellung der Steuereinrichtung (201) derart zu verändern, dass der Parameter optimiert wird.

8. Recheneinheit nach Anspruch 7, wobei die Recheneinheit (200) von der akustischen Messvorrichtung baulich getrennt ausgebildet ist und mit der akustischen Messvorrichtung kabelgebunden oder drahtlos, beispielsweise über Bluetooth verbindbar ist.

9. Recheneinheit nach Anspruch 7, wobei die Recheneinheit die akustische Messvorrichtung (203) umfasst.

10. Recheneinheit nach einem der Ansprüche 7 bis 9, wobei die akustische Messvorrichtung (203) einen oder mehrere akustische Sensoren, beispielsweise Mikrophone, aufweist.

11. Recheneinheit nach einem der Ansprüche 7 bis 10, wobei die Recheneinheit (200) mit der elektronischen Steuereinrichtung (201) über einen in der elektronischen Steuereinrichtung (201) vorgesehenen Webserver (206) oder über einen entsprechenden Adapter verbindbar ist.

12. Antriebssystem aufweisend
- eine Recheneinheit (200) nach einem der Ansprüche 7 bis 11,
- eine elektronische Steuereinrichtung (201),
- eine elektrische Maschine (202),
- eine akustische Messvorrichtung (203),
wobei elektrische Maschine (202) mittels der elektronischen Steuereinrichtung (201) mit einem Energieversorgungsnetz (204) verbindbar ist,
wobei die Recheneinheit (200) mit der elektronischen Steuereinrichtung (201) und mit der akustischen Messvorrichtung (203) verbunden ist.

13. Antriebssystem nach Anspruch 12, wobei die elektronische Steuereinrichtung als ein Umrichter ausgebildet ist.

14. Antriebssystem nach Anspruch 12 oder 13, wobei die elektrische Maschine ein Motor, insbesondere ein Synchron- oder Asynchronmotor ist.
